# EUROPÄISCHE PATENTANMELDUNG

(11) **EP 0 650 909 A1**
(43) Veröffentlichungstag der Anmeldung: **03.05.1995**
(21) Anmeldenummer: 94116980.7
(22) Anmeldetag: 27.10.1994
(51) Int. Cl.: B65G 27/20, B06B 1/16

(54) **Stossförderer**

(30) Priorität: 27.10.1993 DE 4336567
(71) Anmelder: Jöst GmbH + Co. KG, D-48249 Dülmen (DE)
(72) Erfinder: Ameling, Thomas, D-48653 Coesfeld (DE); Mandrella, Hans, D-48165 Münster (DE); Hypki, Thomas, D-48249 Dülmen (DE); Sauer, Gustav, D-48329 Havixbeck (DE)
(74) Vertreter: Habbel, Hans-Georg, Dipl.-Ing.

(57) **Zusammenfassung**

Die Erfindung bezieht sich auf einen Stoßförderer (2), wobei der Antrieb mittels zwei Paar gegenläufig umlaufender Unwuchtwellen (5,6,7,8) erfolgt, so daß eine Förderung nach dem Prinzip der Schüttelrutsche erzielt wird, aber keine vom Fundament aufzunehmenden erheblichen vertikalen Kräfte auftreten.

## Beschreibung

Die Erfindung bezieht sich auf einen Stoßförderer gemäß dem Oberbegriff des Hauptanspruches.

Nach dem Wurfprinzip arbeitende Schwingförderer, d. h. Schwingrinnen oder Schwingrohre sind in der Technik allgemein bekannt und dienen zum Transport der verschiedenartigsten Fördergüter sowie zur Durchführung von Sieb-, Trenn- und Kühlprozessen. Die bekannten Schwingförderer erzeugen dabei im eigentlichen Fördergut eine sogenannte vertikale Komponente, d. h. während der Förderung bilden sich Luftpolster zwischen dem Tragboden und dem Fördergut, so daß eine Anreicherung des Fördergutes mit Luft erfolgt, was häufig unerwünscht ist.

Trotz entsprechender Isoliermaterialien stellt die bekannte vertikale Förderkomponente auch eine enorme Belastung des Fundamentes dar, so daß bei der Installation derartiger Aggregate große bauphysikalische Rücksichten genommen werden müssen.

Die vertikale Komponente wird bei den Schüttelrutschen weitestgehend vermieden, jedoch erfolgt der Antrieb dieser Schüttelrutschen über Kurbel- oder Kurvenscheibengetriebe, und auch hier ist eine Ableitung der auftretenden Kräfte in den Boden notwendig.

Aus der gattungsbildenden DE-PS 21 33 838 wird ein Stoßförderer beschrieben, bei welcher die Antriebseinrichtung als Puffer und als Stoßeinrichtung ausgebildet ist. Bei diesem bekannten Stoßförderer wird die im Rückschwung begriffene Förderfläche am Puffer abrupt abgebremst, worauf das breiförmige geleeartige, d. h. wabbelige Fördergut ins Gleiten kommt. Diese bekannte Einrichtung verlangt ebenfalls einen erheblichen Aufwand für das Fundament und das stoßartige Abbremsen und Antreiben des Förderers ist für viele Fördergüter vollkommen ungeeignet.

Der Erfindung liegt die Aufgabe zugrunde, einen Stoßförderer mit einem sogenannten Gleitprinzip zu schaffen, bei dem kleine oder vernachlässigbar kleine vertikale Kräfte auftreten, so daß im wesentlichen nur ein gleitendes Fördern des Fördergutes erreicht wird und gleichzeitig aber ein Eintragen von Reaktionskräften in das Fundament vermieden wird.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird ein Stoßförderer geschaffen, dessen Antriebseinrichtung aus zwei rotierenden, unterschiedlich großen Unwuchtwellenpaaren besteht, wobei die kleinen Unwuchtmassen in bezug auf die großen Unwuchtmassen die doppelte Drehzahl aufweisen und die Unwuchtmassen einen Versatz gegeneinander aufweisen, wobei zusätzlich die Aufhängungen in den Schwingpunkten des Traggestells in Federelementen wie Gummipuffern, Gummihohlfedern, Schraubendruckfedern od. dgl. gelagert sind. Zusätzlich sind auf den Wellen Schwungmassen gelagert.

Auf jedem Wellenende befinden sich zwei Unwuchtmassen, die mit Spannvorrichtungen untereinander befestigt sind, so daß dadurch eine stufenlose Verstellung der Schwerpunktradien möglich wird, wodurch verschiedene Schwingweiten eingestellt werden können. Die eigentlichen Wellen werden über beispielsweise einen Elektromotor unter Zwischenschaltung eines Keilriemen-Vorgeleges, Zahnriemen-Vorgeleges oder Stellgetriebes oder auch über eine Gelenkwelle und einen Frequenzumformer angetrieben. Durch das Verstellen der Unwuchtmassen kann die Fördergeschwindigkeit des Fördergutes im Stillstand des Förderers vorgewählt werden. Durch das Zwischenschalten eines Stellgetriebes oder eines Frequenzumformers kann die Drehzahl und damit ebenfalls die Fördergeschwindigkeit des Fördergutes, allerdings im Betrieb der Maschine, verstellt oder geregelt werden.

Die Drehzahl des Antriebsmotors ist einstellbar und der Versatzwinkel zwischen den Unwuchtmassenpaaren kann bis zu 50^{o} betragen und ist von der Art des Fördergutes abhängig.

Durch diese Ausbildungsart wird der eigentliche Förderboden oder die Förderrinne unterschiedlich schnell in und entgegen der Transportrichtung des Fördergutes bewegt. Während der Bewegung entgegen der Transportrichtung ist die Beschleunigung des Förderers so groß, daß die Haftreibung zwischen Fördergut und Rinnenboden aufgehoben wird, so daß das Fördergut aufgrund seiner Trägheit räumlich stehenbleibt und der Förderboden bzw. die Förderrinne darunter weggezogen werden. Die Bewegung in Transportrichtung hingegen ist so langsam, daß die Haftreibung zwischen Fördergut und Rinnenboden erhalten bleibt und das Fördergut zusammen mit dem Förderboden eine Teilbewegung in Förderrichtung durchläuft.

Für dieses Förderprinzip werden keine vertikalen Bewegungskomponenten benötigt.

Die optimale Einsatzmöglichkeit liegt im Bereich der Förderung von Stück- und Schüttgütern über große Strecken, wobei insbesondere auch staubförmige Stückgüter gefördert werden können, da das Aufpolstern mit Luft im vorliegenden Fall unterbleibt.

Ein vorteilhafter Einsatzzweck kann die Siebtechnik sein, da es denkbar ist, daß durch Regelung der Transportgeschwindigkeit die Transportgeschwindigkeiten so gesenkt werden, daß die Verweilzeit auf dem Siebboden den jeweiligen Erfordernissen angepaßt werden kann. Weiterhin ist auf folgendes hinzuweisen:
Das Fehlen der vertikalen Bewegungskomponente verhindert ein Springen des Schüttgutes auf dem Förderboden. Dadurch wird das Betriebsgeräusch der Maschine im Vergleich zum herkömmlichen Schwingförderer wesentlich reduziert.

Durch das Fehlen der vertikalen Bewegungskomponente wirkt der Förderboden im Gegensatz zum herkömmlichen Schwingförderer nicht als Luftpumpenmembran. Die Umgebungsluft wird also nicht in Schwingungen versetzt, die wiederum schädlichen Einfluß auf das Umfeld einer Fördermaschine haben können.

Durch das Fehlen der vertikalen Bewegungskomponente wird die Schwingungsisolierung der ganzen Maschine wesentlich vereinfacht. Die besonders schwierig beherrschbaren, vertikalen dynamischen Restkräfte sind im Gegensatz zum herkömmlichen Schwingförderer vernachlässigbar klein.

In sich federnde sehr nachgiebige Fördergüter (Müll, Holzwolle, Kartoffelchips usw.) können problemlos gefördert werden, da nicht der einzelne Fördergutpartikel impulsartig beschleunigt werden muß, sondern der Fördervorgang nur auf die Reibungsgesetze in der Berührungsfläche zwischen Fördergut und Förderboden reduziert wird.

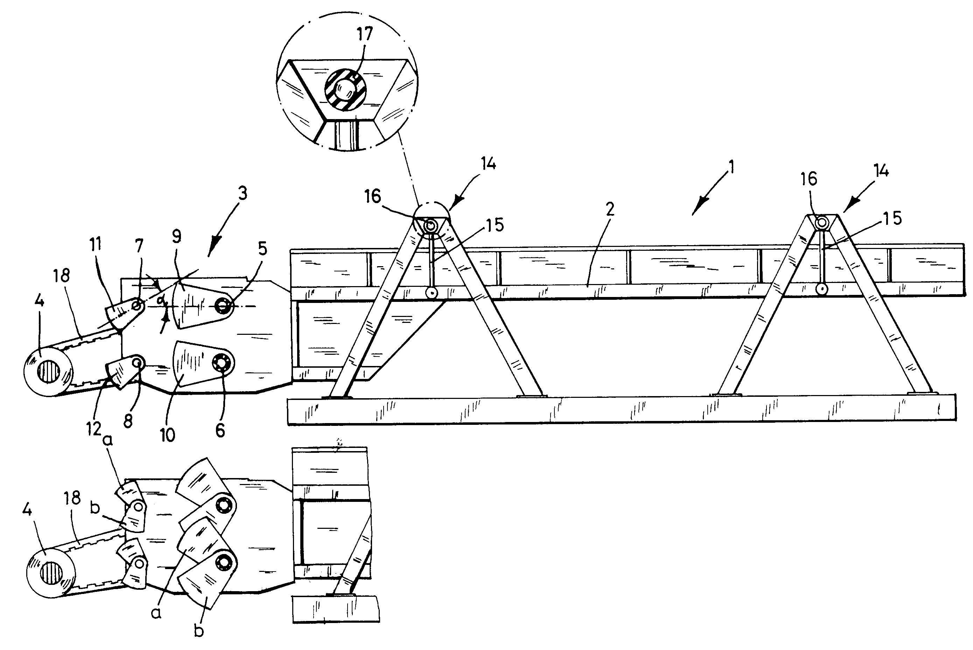

Ein Ausführungsbeispiel der Erfindung wird nachfolgend anhand der Zeichnung erläutert.

In der Zeichnung ist relativ schematisch ein Gleitförderer 1 dargestellt, der im wesentlichen aus der in einem Traggestell 14 über Aufhängeelemente 15, wie Ketten, Seilen, Stangen od. dgl. in Schwingpunkten 16 aufgehängten Förderrinne 2 besteht. Die Aufhängung erfolgt dabei in Gummipuffern 17. An die Förderrinne 2 schließt eine Antriebsvorrichtung 3 an, die aus zwei Wellenpaaren 5 und 6 bzw. 7 und 8 besteht, die mit Unwuchtmassen 9 und 10 bzw. 11 und 12 bestückt sind. Die Wellenpaare 5 und 6 bzw. 7 und 8 werden unter Zwischenschaltung eines Zahnkeilriemens 18 von einem Motor 4 derart angetrieben, daß die Wellen 7 und 8 doppelt so schnell umlaufen wie die Wellen 5 und 6.

Durch entsprechendes Verstellen der Unwuchtmassen 9 und 10 gegenüber den Unwuchtmassen 11 und 12 entsprechend einem Winkel α ist eine stufenlose Verstellung der Schwerpunktsradien möglich, so daß damit die Schwingweiten der Förderrinne 2 eingestellt werden können.

## Patentansprüche

1. Stoßförderer mit einem rinnen- oder trogförmigen, an Schwingpunkten (16) pendelnd mittels Aufhängeelemente (15) aufgehängten Förderer (2), der durch eine zugeordnete, an dem Förderer (2) angreifende Antriebseinrichtung (3) antreibbar ist, dadurch gekennzeichnet,
a) daß die Aufhängeelemente (15) an die Schwingpunkte (16) unter Zwischenschaltung von Federelementen (17) anschließen,
b) daß zwei rotierend angetriebene Wellenpaare (5, 6, 7, 8) vorgesehen sind, wobei ein Wellenpaar kleinere Unwuchtmassen trägt (11, 12), im Gegensatz zum zweiten Wellenpaar mit größeren Unwuchtmassen (9, 10) und die beiden Wellen eines Wellenpaares gegenläufig rotieren, wobei das kleinere Unwuchtmassenpaar (11, 12) gegenüber dem großen Unwuchtmassenpaar (9, 10) mit der doppelten Drehzahl umläuft,
c) daß zwischen dem größeren Unwuchtpaar (9, 10) und dem kleineren Unwuchtpaar (11, 12) ein Winkelversatz (α) vorgesehen ist,
d) daß auf den Wellen (5, 6) und/oder (7, 8) zusätzlich zu den Unwuchtmassen (9, 10; 11, 12) scheibenförmige Schwungmassen aufgesetzt sind.

2. Stoßförderer nach Anspruch 1, dadurch gekennzeichnet, daß der Antrieb der Wellen (5, 6 und (7, 8) unter Einsatz eines Zahnkeilriemens (18) erfolgt.

3. Stoßförderer nach Anspruch 1, dadurch gekennzeichnet, daß der Antrieb der Wellen (5, 6, 7, 8) unter Einsatz kämmender Zahnräder erfolgt.

4. Stoßförderer nach Anspruch 1, 2 oder 3, dadurchgekennzeichnet, daß die Drehzahl des Antriebes (4) einstellbar ist.

5. Stoßförderer nach einem oder mehreren der vorhergehenden Ansprüche, dadurch gekennzeichnet, daß die Unwuchtmassen (9, 10; 11, 12) in Abhängigkeit des Fördergutes auswechselbar sind.

6. Stoßförderer nach einem der vorhergehenden Ansprüche, dadurch gekennzeichnet, daß jede Unwuchtmasse (9, 10; 11, 12) durch zwei Unwuchtmassenteile (a bzw. b) gebildet ist, die mit Spannmittel aneinander festgelegt sind.

7. Stoßförderer nach einem der vorhergehenden Ansprüche, dadurch gekennzeichnet, daß die Unwuchtmassen (9, 10; 11, 12) unabhängig voneinander verstellbar sind.
